# EUROPEAN PATENT APPLICATION

(11) **EP 1 161 085 A1**
(43) Date of publication of application: **05.12.2001**
(21) Application number: 01113116.6
(22) Date of filing: 29.05.2001
(51) Int. Cl.: H04N 5/445

(54) **Television system**

(30) Priority: 31.05.2000 GB 0013045
(71) Applicant: Pace Micro Technology PLC, Shipley, West Yorkshire BD18 3LF (GB)
(72) Inventor: Matey, Jesus, Leeds LS4 2SZ (GB)
(74) Representative: Wood, Graham

(57) **Abstract**

A television system is provided which includes at least a display screen (2). The television system receives video, audio and/or auxiliary data via a broadcast data receiver from a broadcaster at a remote location, and the data is used to generate an EPG for display on the display screen (2). The EPG comprises a series of selectable screen displays selected to be displayed on the display screen (2). The format of one or more of the EPG screen displays can be generated in one of a number of selectable formats and can be selected using control means.

## Description

This invention relates to a television system.

A television system hereinafter described includes a broadcaster for transmitting digital data via terrestrial, cable or digital means, which is received by a broadcast data receiver (called a set top box). A result of the digital data is a large number of channels and programs available for selection by a user. Conventional listing means for this large number of channels and programs are inadequate and this has resulted in the development of Electronic Programme Guides (EPG).

Electronic Programme guides (EPG) for use with television systems are conventionally provided in a single broadcaster determined display format. This single display format may not be easily viewable by all users of the television system. For example, a user suffering from colour blindness may be unable to distinguish between coloured buttons, the selection of which operate different functions of the EPG. A user may not be able to distinguish the text of the EPG from the background display due to the colour of the same. In addition, the size of the text font may be too small for a user to read or too large for sufficient information to be displayed on the screen at any particular time. These problems are obviously undesirable.

It is therefore an object of the present invention to overcome the abovementioned problems and allow the user of the EPG to at least partially determine the display format of the EPG.

According to a first aspect of the present invention there is provided a television system including at least a display screen, said television system receiving video, audio and/or auxiliary data via a broadcast data receiver from a broadcaster at a remote location and said data being used to generate an EPG for display on the display screen, the EPG comprising a series of selectable screen displays selected to be displayed on the display screen and characterised in that the format of at least one of said EPG screen displays can be generated in one of a number of selectable formats, said display formats selectable by the user using control means which allow interaction with the system.

Preferably the number of selectable formats are selectable via the EPG display screen.

The control means is typically a remote control handset.

Further preferably the number of different selectable formats are held in the memory in the receiver. The different formats are typically sent from the broadcaster initially and the formats may be updated or changed at intervals.

In one embodiment the selected EPG format is maintained until a new format is selected, even after the receiver is switched off and on.

In an alternative embodiment the EPG reverts to a default format when the receiver has been switched off and then on. A favourite format option can be provided in a drop down menu and saved in the receiver, such that if a default format is displayed on the screen or another user has altered the format, the user can quickly select their favourite format without having to decide on which format to choose.

Preferably a preview option is provided in the EPG to enable the user to view the format they have chosen.

Preferably the pre-determined formats include display of the EPG on the display screen in different sizes and/or arrangements, different languages, different font sizes, different coloured text, different coloured backgrounds, different shaped operation keys and/or the like.

In a preferred embodiment of the invention, operational keys on the remote control, on the television system and/or on the EPG are provided in specific shapes such that pre-defined operations are initiated by selecting a specific shaped key. This embodiment is useful for user's suffering from colour blindness, who are unable to distinguish different colours and therefore unable to distinguish conventional coloured operational keys.

The above embodiment is also useful for people who have poor eyesight or who are operating the remote control in a dark room and are unable to distinguish different colours easily but are more able to distinguish different shapes by feeling the keys with their fingers.

Preferably the shaped operational keys are also provided in pre-determined colours such that pre-defined operations are initiated by selecting a specific shaped and coloured keys. The combination of shaped and coloured keys provides the user with two means of distinguishing an operational key.

In one embodiment the display format of the EPG can be defined by the user. The television system can include one or more control buttons which allows a user to define certain parameters of the EPG.

Embodiments of the present invention will now be described with reference to the accompanying figures wherein:

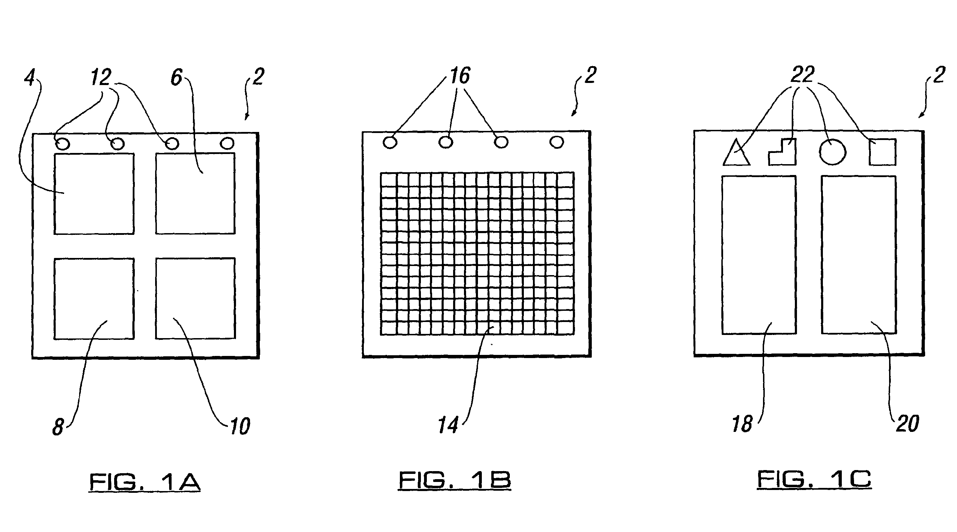

Figures 1A-1C illustrate a number of possible formats of the EPG.

Referring to figures 1A-1C, there is illustrated a number of possible formats of an EPG for use with a television system. The television system includes a display screen 2 for the display of the EPG. The user is able to select one of a number of pre-defined EPG formats using an option/control key on a remote control or an option/control key on the television system, video, DVD and/ or the like.

A summary menu showing the possible pre-defined EPG formats can be displayed on the display screen 2 to enable the user to select a suitable format.

It is possible that only one alternative EPG pre-defined format is provided on the television system and a switch can be provided to switch the EPG between the two different formats according to user preference.

Figure 1A shows a possible pre-defined EPG format which can be selected by a user. The EPG is divided into four sections 4, 6, 8 and 10, each section relating to a particular television channel. A number of option buttons 12 are provided at the top of the EPG display which can be selected by a user to undertake certain functional operations of the EPG.

Figure 1B shows a further possible pre-defined EPG format for selection by a user. The text of the EPG is displayed in a grid 14, which substantially fills the screen, and channel and program information is provided in the boxes defined by the grid. Coloured option buttons 16 are provided to enable a user to undertake certain functional operations of the EPG.

Figure 1C shows a yet further possible pre-defined EPG format for selection by a user. The EPG is divided into two sections 18 and 20, each section relating to a particular television channel. A number of shaped option buttons 22 are provided, which can be selected by a user to undertake certain functional operations of the EPG. The option buttons are shaped such that a user who may be colour blind, or who finds it difficult to distinguish colour, can distinguish the function of each option button via the shape of the same.

It will be appreciated by persons skilled in the art that any number of pre-defined EPG formats can be provided for user-selection. For example, the user may be able to select a pre-defined format having different sized fonts, different coloured font, different coloured background and/or the like. In addition, the arrangement of the text of the EPG may be different. For example, the text could be arranged such that information relating to all available channels is shown simultaneously. Alternatively, the information for one or only a few of the available channels may be shown at any particular time.

A guide page providing information on the EPG is typically provided as an option for display with the EPG. The guide page can provide information and/or instructions relating to the user/broadcaster defined formats. The formats can be selected from this guide page if required. The format of the actual guide page can be divided as per the Figures described above, such that in each section or box of the grid, a different format option can be displayed to be selected by a user. The user can also select whether to use a broadcaster defined format or a user-selected format.

The EPG, when displayed on the display screen, can be provided with a drop down menu to enable a user to quickly and easily select a particular format, such as font size or font type, whilst still viewing the EPG. Furthermore, the user can input threshold values such that only quantities of program and channel information between these threshold values will be displayed at any one time. This threshold value option can be provided in the drop down menu, guide page and/or format option page.

In addition to having customised EPG display formats, the control buttons on the television set, remote control and/or other devices which operate with the television system can be customised to enable user's suffering from certain disabilities, such as colour blindness or poor sight to operate the controls relating to the EPG. For example, the control buttons can be shaped and coloured such that a user can recognise a particular shaped key with a particular function of the EPG. The user can be provided with the option of providing coloured buttons, shaped buttons or a combination of coloured and shaped buttons in the guide page or on screen menu. The button shapes of can include square, triangular, circular, diamond shaped buttons and/or other shapes.

In a further embodiment of the invention, instead of displaying the EPG in a conventional format where all "types of programs", "subtypes of programs", "event lists" and other similar program and channel information is displayed in a single screen, an EPG format can be provided where only a single menu is displayed at one time. Selection of an item from this single menu results in display of the next appropriate menu and so on. For example, the user could select the item "Movies" from the "types" menu, then "Action" from the "subtype" menu and then select the title of an actual film from the "events list" menu. The selections made by the user can be displayed at the top of the display screen (i.e., movies/action/film title), thereby avoiding separate screens relating to each menu appearing on the display screen.

It can be seen from the above description that the present invention provides a means of customising a display for an EPG on a television system.

## Claims

1. A television system including at least a display screen (2), said television system receiving video, audio and/or auxiliary data via a broadcast data receiver from a broadcaster at a remote location and said data being used to generate an EPG for display on the display screen (2), the EPG comprising a series of selectable screen displays selected to be displayed on the display screen and **characterised in that** the format of at least one of said EPG screen displays can be generated in one of a number of selectable formats, said display formats selectable by the user using control means which allow interaction with the system.

2. A television system according to claim 1 **characterised in that** the pre-determined formats are selectable from the EPG display screen.

3. A television system according to claim 1 **characterised in that** the control means is a remote control handset.

4. A television system according to claim 1 **characterised in that** the number of selectable formats are stored in memory of the broadcast data receiver.

5. A television system according to claim 1 **characterised in that** the number of selectable formats are sent from the broadcaster to the broadcast data receiver at pre-determined time intervals.

6. A television system according to claim 1 **characterised in that** when one of the number of selectable formats is selected by the user, the format is maintained for the EPG display until the user selects a different selectable format.

7. A television system according to claim 1 **characterised in that** when one of the number of selectable formats is selected by the user, the EPG reverts to a default format when the television system is switched off and then on.

8. A television system according to claim 1 **characterised in that** a user selected format is stored in the television system as a default format, the EPG reverting to the saved default format when the television system is switched off and then on.

9. A television system according to claim 1 **characterised in that** a preview setting is provided on the EPG to enable a user to view a format prior to selection of the format.

10. A television system according to claim 1 **characterised in that** the number of selectable EPG formats include any or any combination of displaying the EPG in different sizes and/or arrangements, different languages, different font sizes, different coloured text, different coloured backgrounds and/or different shaped operation keys.

11. A television system according to claim 1 **characterised in that** operational keys on the remote control and/or on the television system are provided in specific shapes and/or colours corresponding to specific shaped and/or coloured keys or buttons in one or more of the selectable EPG formats, each allocated to a pre-defined operation on the displayed format, such that one or more of the pre-defined operations are initiated via the EPG by selecting the appropriate one or more specified shaped and/or coloured keys on the remote control and/or on the television system.
